# EUROPÄISCHE PATENTANMELDUNG

(11) **EP 3 599 711 A1**
(43) Veröffentlichungstag der Anmeldung: **29.01.2020**
(21) Anmeldenummer: 18184944.9
(22) Anmeldetag: 23.07.2018
(51) Int. Cl.: H02M 3/335, H02M 3/337, H02M 1/00

(54) **GLEICHSPANNUNGSWANDLER UND DESSEN BETREIBEN**

(71) Anmelder: Siemens Aktiengesellschaft, 80333 München (DE)
(72) Erfinder: Zocher, Markus, 91639 Wolframs-Eschenbach (DE); Hergt, Martin, 90411 Nürnberg (DE)

(57) **Zusammenfassung**

Die Erfindung betrifft einen Gleichspannungswandler (1) zum Erzeugen einer ein- oder mehrphasigen primären Wechselspannung aus einer Eingangsgleichspannung (Uᵢₙ), Transformieren der primären Wechselspannung in eine sekundäre Wechselspannung mit einem Übersetzungsverhältnis (n) und Erzeugen einer Ausgangsgleichspannung (Uₒᵤₜ) aus der sekundären Wechselspannung. Der Gleichspannungswandler (1) weist eine Dual Active Bridge-Topologie mit einem Serienresonanzkreis (9) für jede Wechselspannungsphase auf. Wenn das Verhältnis der Ausgangsgleichspannung (Uₒᵤₜ) zu der Eingangsgleichspannung (Uᵢₙ) größer als das Übersetzungsverhältnis (n) ist, wird eine Phasenverschiebung zwischen der primären Wechselspannung und einem dazu korrespondierenden Serienresonanzkreisstrom durch eine Änderung einer die Wechselspannungen taktenden Taktfrequenz (f) auf Null geregelt. Wenn das Verhältnis der Ausgangsgleichspannung (Uₒᵤₜ) zu der Eingangsgleichspannung (Uᵢₙ) kleiner als das Übersetzungsverhältnis (n) ist, wird eine Phasenverschiebung zwischen der sekundären Wechselspannung und einem dazu korrespondierenden Serienresonanzkreisstrom durch eine Änderung der Taktfrequenz (f) auf Null geregelt.

## Beschreibung

Die Erfindung betrifft einen Gleichspannungswandler mit einer Dual Active Bridge-Topologie und einem Serienresonanzkreis für jede Wechselspannungsphase und ein Verfahren zum Betreiben eines derartigen Gleichspannungswandlers.

Ein Gleichspannungswandler mit einer Dual Active Bridge-Topologie weist zwei Wandlereinheiten mit jeweils mehreren Halbleiterschaltern und eine zwischen die beiden Wandlereinheiten geschaltete Transformatoreinheit auf. Mit einer Wandlereinheit wird aus einer Eingangsgleichspannung eine primäre Wechselspannung erzeugt, die von der Transformatoreinheit in eine sekundäre Wechselspannung transformiert wird. Mit der anderen Wandlereinheit wird aus der sekundären Wechselspannung eine Ausgangsgleichspannung erzeugt. Die Wechselspannungen können ein- oder mehrphasig sein und werden mit einer Taktfrequenz getaktet, mit der die Halbleiterschalter angesteuert werden. Die Erfindung betrifft einen in Dual Active Bridge-Topologie ausgeführten Gleichspannungswandler, der für jede Wechselspannungsphase einen Serienresonanzkreis mit wenigstens einem Kondensator und wenigstens einer Spule aufweist. Üblicherweise wird die Leistung oder die Ausgangsgleichspannung eines derartigen Gleichspannungswandlers durch die Änderung einer Phasenverschiebung zwischen der primären und der sekundären Wechselspannung geregelt. Dabei hängt der Wirkungsgrad des Gleichspannungswandlers von dem Verhältnis der Ausgangsgleichspannung zu der Eingangsgleichspannung ab. Der Wirkungsgrad ist am besten, wenn dieses Verhältnis mit dem Übersetzungsverhältnis der Transformatoreinheit übereinstimmt oder nur wenig von dem Übersetzungsverhältnis der Transformatoreinheit abweicht. Bei größeren Abweichungen dieses Verhältnisses von dem Übersetzungsverhältnis der Transformatoreinheit nimmt der Wirkungsgrad ab.

Der Erfindung liegt die Aufgabe zugrunde, den Wirkungsgrad eines Gleichspannungswandlers mit einer Dual Active Bridge-Topologie und einem Serienresonanzkreis für jede Wechselspannungsphase zu optimieren.

Die Aufgabe wird erfindungsgemäß durch ein Verfahren mit den Merkmalen des Anspruchs 1 und einen Gleichspannungswandler mit den Merkmalen des Anspruchs 7 gelöst.

Vorteilhafte Ausgestaltungen der Erfindung sind Gegenstand der Unteransprüche.

Das erfindungsgemäße Verfahren ist auf das Betreiben eines Gleichspannungswandlers zum Erzeugen einer ein- oder mehrphasigen primären Wechselspannung aus einer Eingangsgleichspannung, Transformieren der primären Wechselspannung in eine sekundäre Wechselspannung mit einem Übersetzungsverhältnis und Erzeugen einer Ausgangsgleichspannung aus der sekundären Wechselspannung gerichtet, wobei der Gleichspannungswandler eine Dual Active Bridge-Topologie mit einem Serienresonanzkreis für jede Wechselspannungsphase aufweist. Erfindungsgemäß wird eine Phasenverschiebung zwischen der primären Wechselspannung und einem dazu korrespondierenden Serienresonanzkreisstrom durch eine Änderung einer die Wechselspannungen taktenden Taktfrequenz auf Null geregelt, wenn das Verhältnis der Ausgangsgleichspannung zu der Eingangsgleichspannung größer als das Übersetzungsverhältnis ist, und eine Phasenverschiebung zwischen der sekundären Wechselspannung und einem dazu korrespondierenden Serienresonanzkreisstrom durch eine Änderung der Taktfrequenz auf Null geregelt, wenn das Verhältnis der Ausgangsgleichspannung zu der Eingangsgleichspannung kleiner als das Übersetzungsverhältnis ist.

Kernidee der Erfindung ist, die Phasenverschiebung zwischen der primären oder sekundären Wechselspannung des Gleichspannungswandlers und einem dazu korrespondierenden Serienresonanzkreisstrom durch eine Änderung der Taktfrequenz der Wechselspannung zu Null zu regeln. Ob die Phasenverschiebung zwischen der primären oder sekundären Wechselspannung und dem Serienresonanzkreisstrom zu Null geregelt wird, hängt dabei davon ab, ob das Verhältnis der Ausgangsgleichspannung zu der Eingangsgleichspannung größer oder kleiner als das Übersetzungsverhältnis der Transformatoreinheit ist. Durch die Regelung werden einerseits Durchgangsverluste reduziert, da die durch eine von der Primärseite beziehungsweise von der Sekundärseite in einen Serienresonanzkreis fließende Blindleistung reduziert wird. Ferner werden Umschaltverluste beim Schalten der Spannungsbrücken deutlich reduziert, da eine primärseitige beziehungsweise sekundärseitige Spannungsbrücke gerade dann umgeschaltet wird, wenn der Strom durch den korrespondierenden Serienresonanzkreis Null oder wenigstens fast Null ist (so genanntes Zero Current Switching). Ohne eine derartige Regelung der Phasenverschiebung zwischen der primären beziehungsweise sekundären Wechselspannung und dem Serienresonanzkreisstrom würden größere Abweichungen des Verhältnisses der Ausgangsgleichspannung zu der Eingangsgleichspannung von dem Übersetzungsverhältnis der Transformatoreinheit zu Phasenverschiebungen zwischen der primären beziehungsweise sekundären Wechselspannung und dem Serienresonanzkreisstrom führen, die die Durchgangsverluste und Umschaltverluste erhöhen und den Wirkungsgrad des Gleichspannungswandlers herabsetzen.

Ausgestaltungen der Erfindung sehen vor, dass die Phasenverschiebung zwischen einer Wechselspannungsphase der primären Wechselspannung und dem durch den Serienresonanzkreis dieser Wechselspannungsphase fließenden Strom auf Null geregelt wird, wenn das Verhältnis der Ausgangsgleichspannung zu der Eingangsgleichspannung größer als das Übersetzungsverhältnis ist, und/oder dass die Phasenverschiebung zwischen einer Wechselspannungsphase der sekundären Wechselspannung und dem durch den Serienresonanzkreis dieser Wechselspannungsphase fließenden Strom auf Null geregelt wird, wenn das Verhältnis der Ausgangsgleichspannung zu der Eingangsgleichspannung kleiner als das Übersetzungsverhältnis ist. Bei diesen Ausgestaltungen wird also jeweils die Phasenverschiebung zwischen einer Wechselspannungsphase der primären beziehungsweise sekundären Wechselspannung und dem durch den Serienresonanzkreis dieser Wechselspannungsphase fließenden Strom auf Null geregelt, je nachdem, ob das Verhältnis der Ausgangsgleichspannung zu der Eingangsgleichspannung größer oder kleiner als das Übersetzungsverhältnis ist. Im Fall einer mehrphasigen Wechselspannung wird also nur jeweils die Phasenverschiebung zwischen einer Wechselspannungsphase der primären beziehungsweise sekundären Wechselspannung und dem dazu korrespondierenden Serienresonanzkreisstrom auf Null geregelt. Durch die festen Phasenbeziehungen zwischen den verschiedenen Wechselspannungsphasen werden dadurch aber auch gleichzeitig die Phasenverschiebungen zwischen den anderen Wechselspannungsphasen der primären beziehungsweise sekundären Wechselspannung und den dazu jeweils korrespondierenden Serienresonanzkreisströmen wenigstens näherungsweise auf Null geregelt.

Andere Ausgestaltungen der Erfindung sehen vor, dass im Fall einer mehrphasigen Wechselspannung ein Mittelwert von Phasenverschiebungen zwischen jeweils einer Wechselspannungsphase der primären Wechselspannung und dem durch den Serienresonanzkreis dieser Wechselspannungsphase fließenden Strom auf Null geregelt wird, wenn das Verhältnis der Ausgangsgleichspannung zu der Eingangsgleichspannung größer als das Übersetzungsverhältnis ist, und/oder ein Mittelwert von Phasenverschiebungen zwischen jeweils einer Wechselspannungsphase der sekundären Wechselspannung und dem durch den Serienresonanzkreis dieser Wechselspannungsphase fließenden Strom auf Null geregelt wird, wenn das Verhältnis der Ausgangsgleichspannung zu der Eingangsgleichspannung kleiner als das Übersetzungsverhältnis ist. Bei diesen Ausgestaltungen der Erfindung werden also Mittelwerte von Phasenverschiebungen zwischen jeweils einer Wechselspannungsphase der primären beziehungsweise sekundären Wechselspannung und dem dazu korrespondierenden Serienresonanzkreisstrom ermittelt und zu Null geregelt. Dadurch können vorteilhaft Messungenauigkeiten bei der Ermittlung der einzelnen Phasenverschiebungen und kleine Schwankungen der Phasenbeziehungen zwischen den verschiedenen Wechselstromphasen ausgeglichen werden.

Eine weitere Ausgestaltung der Erfindung sieht vor, dass durch eine Änderung einer Phasenverschiebung zwischen der primären Wechselspannung und der sekundären Wechselspannung eine von dem Gleichspannungswandler übertragene Leistung auf einen Leistungssollwert oder die Ausgangsgleichspannung auf einen Spannungssollwert geregelt wird. Diese Ausgestaltung der Erfindung sieht eine Zwei-Größen-Regelung des Gleichspannungswandlers vor, bei der neben der Taktfrequenz auch die Phasenverschiebung zwischen der primären Wechselspannung und der sekundären Wechselspannung geändert wird. Dadurch kann die Leistung oder die Ausgangsgleichspannung des Gleichspannungswandlers mit einem optimierten Wirkungsgrad geregelt werden.

Ein erfindungsgemäßer Gleichspannungswandler zum Erzeugen einer ein- oder mehrphasigen primären Wechselspannung aus einer Eingangsgleichspannung, Transformieren der primären Wechselspannung in eine sekundäre Wechselspannung mit einem Übersetzungsverhältnis und Erzeugen einer Ausgangsgleichspannung aus der sekundären Wechselspannung umfasst für jede Wechselspannungsphase eine primärseitige Spannungsbrücke mit mehreren Halbleiterschaltern zum Erzeugen der primären Wechselspannung aus der Eingangsgleichspannung, eine Transformatoreinheit zum Transformieren der primären Wechselspannung in die sekundäre Wechselspannung, für jede Wechselspannungsphase eine sekundärseitige Spannungsbrücke mit mehreren Halbleiterschaltern zum Erzeugen der Ausgangsgleichspannung aus der sekundären Wechselspannung, für jede Wechselspannungsphase einen Serienresonanzkreis und eine Messvorrichtungsanordnung zum Erfassen der Eingangsgleichspannung, der Ausgangsgleichspannung und zeitlicher Verläufe wenigstens einer Wechselspannungsphase der primären Wechselspannung, der dazu korrespondierenden Wechselspannungsphase der sekundären Wechselspannung und des durch den Serienresonanzkreis dieser Wechselspannungsphase fließenden Stroms. Ferner umfasst der Gleichspannungswandler eine Regelungseinheit, die dazu ausgebildet ist, eine Phasenverschiebung zwischen der primären Wechselspannung und einem dazu korrespondierenden Serienresonanzkreisstrom durch eine Änderung einer die Wechselspannungen taktenden Taktfrequenz auf Null zu regeln, wenn das Verhältnis der Ausgangsgleichspannung zu der Eingangsgleichspannung größer als das Übersetzungsverhältnis ist, und eine Phasenverschiebung zwischen der sekundären Wechselspannung und einem dazu korrespondierenden Serienresonanzkreisstrom durch eine Änderung der Taktfrequenz auf Null zu regeln, wenn das Verhältnis der Ausgangsgleichspannung zu der Eingangsgleichspannung kleiner als das Übersetzungsverhältnis ist.

Ein erfindungsgemäßer Gleichspannungswandler ermöglicht die Durchführung des erfindungsgemäßen Verfahrens. Die Vorteile eines erfindungsgemäßen Gleichspannungswandlers entsprechen den oben bereits genannten Vorteilen des erfindungsgemäßen Verfahrens und werden hier nicht noch einmal wiederholt.

Bei einer Ausgestaltung eines mehrphasigen erfindungsgemäßen Gleichspannungswandlers ist jede primärseitige Spannungsbrücke eine Halbbrücke, in deren Brückenarmen jeweils ein Halbleiterschalter angeordnet ist und deren Brückenzweig mit einer Primärwicklung der Transformatoreinheit verbunden ist, und jede sekundärseitige Spannungsbrücke ist eine Halbbrücke, in deren Brückenarmen jeweils ein Halbleiterschalter angeordnet ist und deren Brückenzweig mit einer Sekundärwicklung der Transformatoreinheit verbunden ist. Als Halbbrücken ausgebildete Spannungsbrücken reduzieren gegenüber als Vollbrücken ausgebildeten Spannungsbrücken vorteilhaft die Anzahl der Halbleiterschalter und damit den Platzbedarf und die Materialkosten für die Spannungsbrücken.

Bei einer Ausgestaltung eines einphasigen erfindungsgemäßen Gleichspannungswandlers ist primärseitige Spannungsbrücke eine Vollbrücke, in deren Brückenarmen jeweils ein Halbleiterschalter angeordnet ist und deren Brückenzweig mit einer Primärwicklung der Transformatoreinheit verbunden ist, und die sekundärseitige Spannungsbrücke ist eine Vollbrücke, in deren Brückenarmen jeweils ein Halbleiterschalter angeordnet ist und deren Brückenzweig mit einer Sekundärwicklung der Transformatoreinheit verbunden ist.

Bei einer weiteren Ausgestaltung eines mehrphasigen erfindungsgemäßen Gleichspannungswandlers ist die Transformatoreinheit als ein mehrphasiger Transformator ausgebildet oder weist für jede Wechselspannungsphase einen Transformator auf. Die Ausführung der Transformatoreinheit als ein mehrphasiger Transformator vereinfacht im mehrphasigen Fall die Ausbildung des Gleichspannungswandlers gegenüber der Ausführung mit einzelnen Transformatoren, die jedoch ebenfalls möglich ist.

Bei einer weiteren Ausgestaltung eines erfindungsgemäßen Gleichspannungswandlers weist die Regelungseinheit wenigstens einen ersten Phasendetektor zum Ermitteln einer Phasenverschiebung zwischen einer Wechselspannungsphase der primären Wechselspannung und dem durch den Serienresonanzkreis dieser Wechselspannungsphase fließenden Strom und einen zweiten Phasendetektor zum Ermitteln einer Phasenverschiebung zwischen einer Wechselspannungsphase der sekundären Wechselspannung und dem durch den Serienresonanzkreis dieser Wechselspannungsphase fließenden Strom auf. Die Verwendung unterschiedlicher Phasendetektoren für Wechselspannungsphasen der primären und sekundären Wechselspannung ermöglicht es vorteilhaft, schnell zwischen dem Ermitteln einer Phasenverschiebung zwischen einer primären Wechselspannungsphase und dem korrespondierenden Serienresonanzkreisstrom und dem Ermitteln einer Phasenverschiebung zwischen einer sekundären Wechselspannungsphase und dem korrespondierenden Serienresonanzkreisstrom zu wechseln, wenn sich das Verhältnis der Ausgangsgleichspannung zu der Eingangsgleichspannung ändert.

Bei einer weiteren Ausgestaltung eines erfindungsgemäßen Gleichspannungswandlers ist die Regelungseinheit dazu ausgebildet, die Phasenverschiebung zwischen einer Wechselspannungsphase der primären Wechselspannung und dem durch den Serienresonanzkreis dieser Wechselspannungsphase fließenden Strom auf Null zu regeln, wenn das Verhältnis der Ausgangsgleichspannung zu der Eingangsgleichspannung größer als das Übersetzungsverhältnis ist, und die Phasenverschiebung zwischen einer Wechselspannungsphase der sekundären Wechselspannung und dem durch den Serienresonanzkreis dieser Wechselspannungsphase fließenden Strom auf Null zu regeln, wenn das Verhältnis der Ausgangsgleichspannung zu der Eingangsgleichspannung kleiner als das Übersetzungsverhältnis ist.

Bei einer alternativen Ausgestaltung eines mehrphasigen erfindungsgemäßen Gleichspannungswandlers ist die Messvorrichtungsanordnung zum Erfassen zeitlicher Verläufe mehrerer Wechselspannungsphasen der primären Wechselspannung, der dazu korrespondierenden Wechselspannungsphasen der sekundären Wechselspannung und der durch die Serienresonanzkreise dieser Wechselspannungsphasen fließenden Ströme ausgebildet und die Regelungseinheit ist dazu ausgebildet, einen Mittelwert der Phasenverschiebungen zwischen jeweils einer dieser Wechselspannungsphasen der primären Wechselspannung und dem durch den Serienresonanzkreis dieser Wechselspannungsphase fließenden Strom auf Null zu regeln, wenn das Verhältnis der Ausgangsgleichspannung zu der Eingangsgleichspannung größer als das Übersetzungsverhältnis ist, und einen Mittelwert der Phasenverschiebungen zwischen jeweils einer dieser Wechselspannungsphasen der sekundären Wechselspannung und dem durch den Serienresonanzkreis dieser Wechselspannungsphase fließenden Strom auf Null zu regeln, wenn das Verhältnis der Ausgangsgleichspannung zu der Eingangsgleichspannung kleiner als das Übersetzungsverhältnis ist.

Bei einer weiteren Ausgestaltung eines erfindungsgemäßen Gleichspannungswandlers ist die Regelungseinheit dazu ausgebildet, durch Änderung einer Phasenverschiebung zwischen der primären Wechselspannung und der sekundären Wechselspannung eine von dem Gleichspannungswandler übertragene Leistung auf einen Leistungssollwert oder die Ausgangsgleichspannung auf einen Spannungssollwert zu regeln.

Die drei vorgenannten Ausgestaltungen eines erfindungsgemäßen Gleichspannungswandlers entsprechen oben genannten Ausgestaltungen des erfindungsgemäßen Verfahrens, deren Vorteile ebenfalls oben bereits genannt wurden und hier nicht wiederholt werden.

Bei einer weiteren Ausgestaltung eines erfindungsgemäßen Gleichspannungswandlers ist jeder Serienresonanzkreis auf der Sekundärseite oder der Primärseite der Transformatoreinheit angeordnet oder die Komponenten jedes Serienresonanzkreises sind auf die Sekundärseite und die Primärseite der Transformatoreinheit verteilt. Die Gestaltung der Serienresonanzkreise und die Aufteilung der Komponenten der Serienresonanzkreise auf die Sekundärseite und die Primärseite der Transformatoreinheit ist für die Erfindung unerheblich, das heißt die Erfindung ist vorteilhaft für verschiedene Ausführungen der Serienresonanzkreise verwendbar, da die Transformatoreinheit für die Ströme der Serienresonanzkreise im Wesentlichen nur eine Impedanzänderung bewirkt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen Schaltplan eines dreiphasigen Gleichspannungswandlers mit einer Dual Active Bridge-Topologie und einem Serienresonanzkreis für jede Wechselspannungsphase,
- FIG 2: einen Regelkreis zum Regeln eines Gleichspannungswandlers,
- FIG 3: ein Blockdiagramm eines Taktfrequenzreglers zum Regeln einer Taktfrequenz eines Gleichspannungswandlers,
- FIG 4: zeitliche Verläufe einer Wechselspannungsphase einer primären Wechselspannung, der dazu korrespondierenden Wechselspannungsphase einer sekundären Wechselspannung und des durch einen Serienresonanzkreis dieser Wechselspannungsphase fließenden Stroms ohne eine Änderung der Taktfrequenz der Wechselspannung,
- FIG 5: zeitliche Verläufe einer Wechselspannungsphase einer primären Wechselspannung, der dazu korrespondierenden Wechselspannungsphase einer sekundären Wechselspannung und des durch einen Serienresonanzkreis dieser Wechselspannungsphase fließenden Stroms mit einer Änderung der Taktfrequenz der Wechselspannung.

Einander entsprechende Teile sind in den Figuren mit denselben Bezugszeichen versehen.

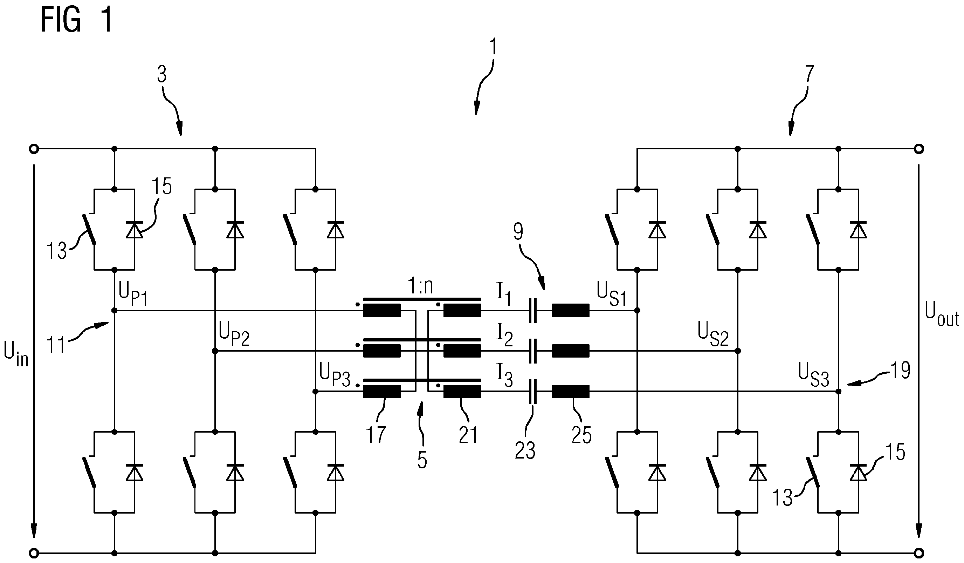

Figur 1 zeigt einen Schaltplan eines dreiphasigen Gleichspannungswandlers 1 zum Umwandeln einer Eingangsgleichspannung Uᵢₙ in eine Ausgangsgleichspannung Uₒᵤₜ. Der Gleichspannungswandler 1 umfasst eine erste Wandlereinheit 3 zum Erzeugen einer primären Wechselspannung aus der Eingangsgleichspannung Uᵢₙ, eine Transformatoreinheit 5 zum Transformieren der primären Wechselspannung in eine sekundäre Wechselspannung, eine zweite Wandlereinheit 7 zum Erzeugen der Ausgangsgleichspannung Uₒᵤₜ aus der sekundären Wechselspannung und für jede Wechselspannungsphase einen Serienresonanzkreis 9.

Der Gleichspannungswandler 1 weist eine Dual Active Bridge-Topologie auf. Die erste Wandlereinheit 3 weist für jede Wechselspannungsphase U_{P1}, U_{P2}, U_{P3} der primären Wechselspannung eine primärseitige Spannungsbrücke 11 auf. Jede primärseitige Spannungsbrücke 11 ist als eine Halbbrücke ausgebildet, in deren Brückenarmen jeweils ein Halbleiterschalter 13 und eine parallel zu dem Halbleiterschalter 13 geschaltete Freilaufdiode 15 angeordnet sind und deren Brückenzweig mit einer Primärwicklung 17 der Transformatoreinheit 5 verbunden ist.

Die zweite Wandlereinheit 5 weist für jede Wechselspannungsphase U_{S1}, U_{S2}, U_{S3} der sekundären Wechselspannung eine sekundärseitige Spannungsbrücke 19 auf. Jede sekundärseitige Spannungsbrücke 19 ist als eine Halbbrücke ausgebildet, in deren Brückenarmen jeweils ein Halbleiterschalter 13 und eine parallel zu dem Halbleiterschalter 13 geschaltete Freilaufdiode 15 angeordnet sind und deren Brückenzweig über einen Serienresonanzkreis 9 mit einer Sekundärwicklung 21 der Transformatoreinheit 5 verbunden ist.

Jeder Serienresonanzkreis 9 weist eine Reihenschaltung eines Kondensators 23 und einer Spule 25 auf.

Die Transformatoreinheit 5 ist als ein dreiphasiger Transformator ausgebildet.

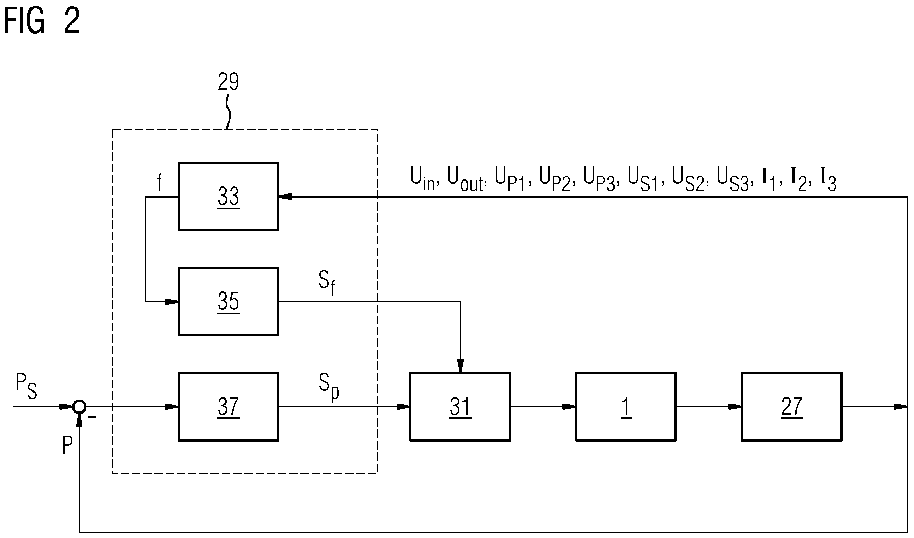

Der Gleichspannungswandler 1 weist ferner eine Messvorrichtungsanordnung 27 und eine Regelungseinheit 29 auf, die in Figur 1 nicht dargestellt sind (siehe Figur 2). Die Messvorrichtungsanordnung 27 weist Messvorrichtungen zum Erfassen der Eingangsgleichspannung Uᵢₙ, der Ausgangsgleichspannung Uₒᵤₜ, einer von dem Gleichspannungswandler 1 übertragenen Leistung P und zeitlicher Verläufe der Wechselspannungsphasen U_{P1}, U_{P2}, U_{P3} der primären Wechselspannung, der Wechselspannungsphasen U_{S1}, U_{S2}, U_{S3} der sekundären Wechselspannung und der durch die Serienresonanzkreise 9 fließenden Ströme I₁, I₂, I₃ auf.

Die Regelungseinheit 29 ist dazu ausgebildet, einen Mittelwert von Phasenverschiebungen zwischen jeweils einer Wechselspannungsphase U_{P1}, U_{P2}, U_{P3} der primären Wechselspannung und dem durch den Serienresonanzkreis 9 dieser Wechselspannungsphase U_{P1}, U_{P2}, U_{P3} fließenden Strom I₁, I₂, I₃ durch eine Änderung einer die Wechselspannungen taktenden Taktfrequenz f auf Null zu regeln, wenn das Verhältnis der Ausgangsgleichspannung Uₒᵤₜ zu der Eingangsgleichspannung Uᵢₙ größer als das Übersetzungsverhältnis n der Transformatoreinheit 5 ist, und einen Mittelwert von Phasenverschiebungen zwischen jeweils einer Wechselspannungsphase U_{S1}, U_{S2}, U_{S3} der sekundären Wechselspannung und dem durch den Serienresonanzkreis 9 dieser Wechselspannungsphase U_{S1}, U_{S2}, U_{S3} fließenden Strom I₁, I₂, I₃ auf Null zu regeln, wenn das Verhältnis der Ausgangsgleichspannung Uₒᵤₜ zu der Eingangsgleichspannung Uᵢₙ kleiner als das Übersetzungsverhältnis n ist.

Ferner ist die Regelungseinheit 29 dazu ausgebildet, die von dem Gleichspannungswandler 1 übertragene Leistung P durch Änderung einer Phasenverschiebung zwischen der primären Wechselspannung und der sekundären Wechselspannung auf einen Leistungssollwert P_{S} zu regeln.

Figur 2 zeigt einen Regelkreis zum Betreiben des in Figur 1 gezeigten Gleichspannungswandlers 1 gemäß dem erfindungsgemäßen Verfahren. Der Regelkreis weist die Regelungseinheit 29, eine Ansteuerungsanordnung 31 zum Ansteuern der Halbleiterschalter 13, den Gleichspannungswandler 1 und die Messvorrichtungsanordnung 27 auf.

Die Regelungseinheit 29 umfasst einen Taktfrequenzregler 33, einen spannungsgesteuerten Oszillator 35 (VCO = Voltage-Controlled Oscillator) und einen Phasenverschiebungsregler 37.

Mit der Messvorrichtungsanordnung 27 werden die Eingangsgleichspannung Uᵢₙ, die Ausgangsgleichspannung Uₒᵤₜ, die von dem Gleichspannungswandler 1 übertragene Leistung P und zeitliche Verläufe der Wechselspannungsphasen U_{P1}, U_{P2}, U_{P3} der primären Wechselspannung, der Wechselspannungsphasen U_{S1}, U_{S2}, U_{S3} der sekundären Wechselspannung und der durch die Serienresonanzkreise 9 fließenden Ströme I₁, I₂, I₃ erfasst.

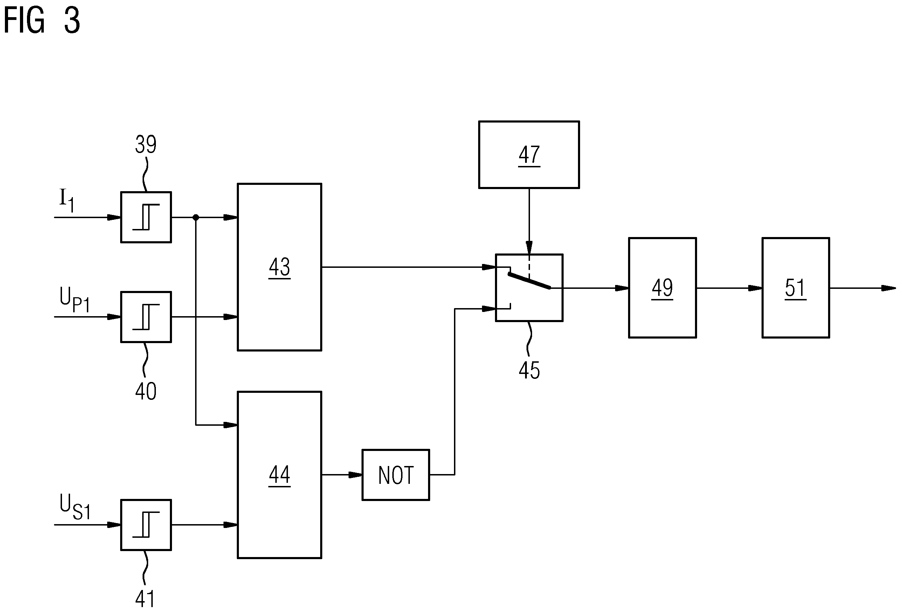

Dem Taktfrequenzregler 33 werden von der Messvorrichtungsanordnung 27 die Eingangsgleichspannung Uᵢₙ, die Ausgangsgleichspannung Uₒᵤₜ und die zeitlichen Verläufe der Wechselspannungsphasen U_{P1}, U_{P2}, U_{P3} der primären Wechselspannung, der Wechselspannungsphasen U_{S1}, U_{S2}, U_{S3} der sekundären Wechselspannung und der durch die Serienresonanzkreise 9 fließenden Ströme I₁, I₂, I₃ übermittelt. Der Taktfrequenzregler 33 ermittelt in unten anhand von Figur 3 näher beschriebener Weise die Taktfrequenz f und übermittelt sie dem spannungsgesteuerten Oszillator 35.

Der spannungsgesteuerte Oszillator 35 erzeugt eine Rechteckspannung der Taktfrequenz f, die als Taktsignal S_{f} für die Ansteuerungsanordnung 31 dient.

Dem Phasenverschiebungsregler 37 wird eine Abweichung der von der Messvorrichtungsanordnung 27 ermittelten Leistung P des Gleichspannungswandlers 1 von dem Leistungssollwert P_{S} übermittelt. Der Phasenverschiebungsregler 37 übermittelt ein Phasenverschiebungssignal S_{P} an die Ansteuerungsanordnung 31, durch das die Leistung P durch eine Änderung der Phasenverschiebung zwischen der primären Wechselspannung und der sekundären Wechselspannung auf den Leistungssollwert P_{S} geregelt wird. Der Phasenverschiebungsregler 37 ist beispielsweise als ein PI-Regler ausgebildet.

Die Ansteuerungsanordnung 31 steuert die Halbleiterschalter 13 des Gleichspannungswandlers 1 an. Beispielsweise ist jeder Halbleiterschalter 13 ein Bipolartransistor mit isolierter Gate-Elektrode (IGBT = insulated-gate bipolar transistor) oder ein Metall-Oxid-Halbleiter-Feldeffekttransistor (MOSFET = metal-oxide-semiconductor field-effect transistor) und die Ansteuerungsanordnung 31 weist für jeden Halbleiterschalter 13 einen Gate-Treiber auf, dem das Taktsignal S_{f} und das Phasenverschiebungssignal S_{P} zugeführt werden.

Figur 3 zeigt ein Blockdiagramm des Taktfrequenzreglers 33, wobei beispielhaft die Auswertung einer primären Wechselspannungsphase U_{P1}, der korrespondierenden sekundären Wechselspannungsphase U_{S1} und des Stroms I₁ durch den korrespondierenden Serienresonanzkreis 9 gezeigt ist. Für jede dieser Größen U_{P1}, U_{S1}, I₁ wird mit einem Digitalisierungsglied 39 bis 41 fortlaufend ein digitales Vorzeichensignal ermittelt, das ein momentanes Vorzeichen der Größe U_{P1}, U_{S1}, I₁ angibt. Jedes Digitalisierungsglied 39 bis 41 ist beispielsweise als ein Schmitt-Trigger ausgebildet.

Die für die primäre Wechselspannungsphase U_{P1} und den Strom I₁ ermittelten Vorzeichensignale werden einem ersten digitalen Phasendetektor 43 zugeführt, der daraus eine Phasenverschiebung zwischen der primären Wechselspannungsphase U_{P1} und dem Strom I₁ ermittelt.

Die für die sekundäre Wechselspannungsphase U_{S1} und den Strom I₁ ermittelten Vorzeichensignale werden einem zweiten digitalen Phasendetektor 44 zugeführt, der daraus eine Phasenverschiebung zwischen der sekundären Wechselspannungsphase U_{S1} und dem Strom I₁ ermittelt.

Die Phasendetektoren 43, 44 weisen beispielsweise jeweils ein EXOR-Gatter auf.

Das Ausgangssignal des ersten Phasendetektors 43 und das invertierte Ausgangssignal des zweiten Phasendetektors 44 werden einem Auswahlglied 45 zugeführt, das von einem Vergleichsglied 47 gesteuert wird. Das Vergleichsglied 47 ermittelt ein Verhältnis Uₒᵤₜ/Uᵢₙ der Ausgangsgleichspannung Uₒᵤₜ zu der Eingangsgleichspannung Uᵢₙ und vergleicht das Verhältnis mit dem Übersetzungsverhältnis n. Wenn das Verhältnis Uₒᵤₜ/Uᵢₙ größer als das Übersetzungsverhältnis n ist, wird von dem Auswahlglied 45 das Ausgangssignal des ersten Phasendetektors 43 an ein Mittelungsglied 49 weitergeleitet. Wenn das Verhältnis Uₒᵤₜ/Uᵢₙ kleiner als das Übersetzungsverhältnis n ist, wird von dem Auswahlglied 45 das invertierte Ausgangssignal des zweiten Phasendetektors 44 an das Mittelungsglied 49 weitergeleitet. Das Ausgangssignal des zweiten Phasendetektors 44 wird invertiert, um die Taktfrequenz f im Fall Uₒᵤₜ/Uᵢₙ < n in eine andere Richtung zu ändern als im Fall Uₒᵤₜ/Uᵢₙ > n.

Entsprechend werden die anderen beiden primären Wechselspannungsphasen U_{P2}, U_{P3}, die korrespondierenden sekundären Wechselspannungsphasen U_{S2}, U_{S3} und Ströme I₂, I₃ durch die korrespondierenden Serienresonanzkreise 9 ausgewertet, so dass dem Mittelungsglied 49 für jede Wechselspannungsphase des Gleichspannungswandlers 1 die Phasenverschiebung zwischen der primären Wechselspannungsphase U_{P1}, U_{P2}, U_{P3} und dem Strom I₁, I₂, I₃ durch den korrespondierenden Serienresonanzkreis 9 zugeführt wird, wenn das Verhältnis Uₒᵤₜ/Uᵢₙ größer als das Übersetzungsverhältnis n ist, und als invertiertes Signal die Phasenverschiebung zwischen der sekundären Wechselspannungsphase U_{S1}, U_{S2}, U_{S3} und dem Strom I₁, I₂, I₃ durch den korrespondierenden Serienresonanzkreis 9 zugeführt wird, wenn das Verhältnis Uₒᵤₜ/Uᵢₙ kleiner als das Übersetzungsverhältnis n ist.

Das Mittelungsglied 49 weist einen Tiefpass auf, mit dem die ihm zugeführten Signale gefiltert werden, und bildet aus den gefilterten Signalen einen Mittelwert, den es an ein Regelungsglied 51 ausgibt.

Das Regelungsglied 51 ermittelt aus dem ihm von dem Mittelungsglied 49 zugeführten Signal die Taktfrequenz f für die Ansteuerung der Halbleiterschalter 13. Das Regelungsglied 51 ist beispielsweise als ein PI-Regler ausgebildet.

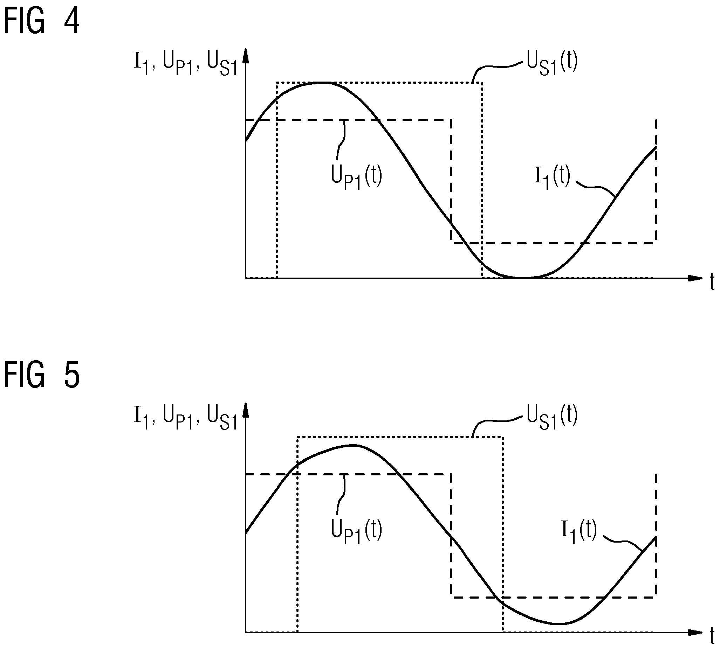

Die Figuren 4 und 5 illustrieren den Effekt der Erfindung auf Verläufe einer primären Wechselspannungsphase U_{P1}, der korrespondierenden sekundären Wechselspannungsphase U_{S1} und des Stroms I₁ durch den korrespondierenden Serienresonanzkreis 9 in Abhängigkeit von einer Zeit t im Fall, dass das Verhältnis Uₒᵤₜ/Uᵢₙ größer als das Übersetzungsverhältnis n ist.

Figur 4 zeigt die Verläufe ohne eine Änderung der Taktfrequenz f. Der Strom I₁ durch den Serienresonanzkreis 9 eilt der primären Wechselspannungsphase U_{P1} und der sekundären Wechselspannungsphase U_{S1} voraus. Dies hat einen Anstieg der Durchgangsverluste zur Folge, weil von primärer Seite und von sekundärer Seite Blindleistung in den Serienresonanzkreis 9 fließt. Außerdem treten hohe Umschaltverluste in der primärseitigen Spannungsbrücke 11 der primären Wechselspannungsphase U_{P1} und der sekundärseitigen Spannungsbrücke 19 der sekundären Wechselspannungsphase U_{S1} auf, da der Momentanwert des Stroms I₁ zu allen Zeitpunkten, in denen sich das Vorzeichen der einer Wechselspannungsphase U_{P1}, U_{S1} verändert, relativ groß ist.

Figur 5 zeigt die Verläufe mit einer erfindungsgemäßen Regelung der Phasenverschiebung zwischen U_{P1} und I₁ auf Null durch eine Änderung der Taktfrequenz f. Durch die Regelung werden die Durchgangsverluste der primärseitigen Spannungsbrücke 11 der primären Wechselspannungsphase U_{P1} gegenüber der in Figur 4 gezeigten Situation reduziert, da von dieser Spannungsbrücke 11 aus keine Blindleistung in den korrespondierenden Serienresonanzkreis 9 fließt. Weiterhin werden die Umschaltverluste deutlich reduziert, da diese primärseitigen Spannungsbrücke 11 genau dann umgeschaltet wird, wenn der Strom I₁ Null ist (so genanntes Zero Current Switching). Dadurch wird der Wirkungsgrad verbessert. Die sekundärseitige Spannungsbrücke 19 der sekundären Wechselspannungsphase U_{S1} verursacht zwar weiterhin eine gewisse Verlustleistung, im Vergleich zu der in Figur 4 gezeigten Situation sind diese jedoch geringer, da der Maximalwert des Stroms I₁ sowie die Momentanwerte des Stroms I₁ in den Umschaltzeitpunkten dieser Spannungsbrücke 19 geringer sind.

Die anhand der Figuren 1 bis 5 beschriebenen Ausführungsbeispiele eines erfindungsgemäßen Gleichspannungswandlers 1 und des erfindungsgemäßen Verfahrens können auf verschiedene Weisen zu anderen Ausführungsbeispielen modifiziert werden. Beispielsweise kann der Gleichspannungswandler 1 eine von drei verschiedenen Anzahlen von Wechselspannungsphasen aufweisen. Insbesondere kann er auch einphasig ausgeführt sein. In dem einphasigen Fall weist der Gleichspannungswandler 1 beispielsweise eine primärseitige Spannungsbrücke 11 und eine sekundärseitige Spannungsbrücke 19 auf, die jeweils als eine Vollbrücke ausgebildet sind. Ferner kann im Fall eines mehrphasigen Gleichspannungswandlers 1 vorgesehen sein, dass lediglich die Phasenverschiebung zwischen einer der primären Wechselspannungsphasen U_{P1}, U_{P2}, U_{P3} und dem Strom I₁, I₂, I₃ des korrespondierenden Serienresonanzkreises 9 erfasst und auf Null geregelt wird, wenn das Verhältnis Uₒᵤₜ/Uᵢₙ größer als das Übersetzungsverhältnis n ist, beziehungsweise die Phasenverschiebung zwischen einer der sekundären Wechselspannungsphasen U_{S1}, U_{S2}, U_{S3} und dem Strom I₁, I₂, I₃ des korrespondierenden Serienresonanzkreises 9 erfasst und auf Null geregelt wird, wenn das Verhältnis Uₒᵤₜ/Uᵢₙ kleiner als das Übersetzungsverhältnis n ist, statt alle primären Wechselspannungsphasen U_{P1}, U_{P2}, U_{P3}, sekundären Wechselspannungsphasen U_{S1}, U_{S2}, U_{S3} und Ströme I₁, I₂, I₃ zu erfassen und Mittelwerte von Phasenverschiebungen zu bilden. Ferner kann im Fall eines mehrphasigen Gleichspannungswandlers 1 vorgesehen sein, dass die Transformatoreinheit 5 statt eines mehrphasigen Transformators für jede Wechselspannungsphase einen Transformator aufweist. Des Weiteren können statt analoge statt digitaler Phasendetektorn 43, 44 vorgesehen sein. Ferner kann vorgesehen sein, dass die Regelungseinheit 29 dazu ausgebildet ist, durch Änderung einer Phasenverschiebung zwischen der primären Wechselspannung und der sekundären Wechselspannung die Ausgangsgleichspannung Uₒᵤₜ auf einen Spannungssollwert zu regeln statt die übertragene Leistung P auf einen Leistungssollwert P_{S} zu regeln.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines Gleichspannungswandlers (1) zum Erzeugen einer ein- oder mehrphasigen primären Wechselspannung aus einer Eingangsgleichspannung (Uᵢₙ), Transformieren der primären Wechselspannung in eine sekundäre Wechselspannung mit einem Übersetzungsverhältnis (n) und Erzeugen einer Ausgangsgleichspannung (Uₒᵤₜ) aus der sekundären Wechselspannung, wobei der Gleichspannungswandler (1) eine Dual Active Bridge-Topologie mit einem Serienresonanzkreis (9) für jede Wechselspannungsphase aufweist, wobei
- eine Phasenverschiebung zwischen der primären Wechselspannung und einem dazu korrespondierenden Serienresonanzkreisstrom durch eine Änderung einer die Wechselspannungen taktenden Taktfrequenz (f) auf Null geregelt wird, wenn das Verhältnis der Ausgangsgleichspannung (Uₒᵤₜ) zu der Eingangsgleichspannung (Uᵢₙ) größer als das Übersetzungsverhältnis (n) ist, und
- eine Phasenverschiebung zwischen der sekundären Wechselspannung und einem dazu korrespondierenden Serienresonanzkreisstrom durch eine Änderung der Taktfrequenz (f) auf Null geregelt wird, wenn das Verhältnis der Ausgangsgleichspannung (Uₒᵤₜ) zu der Eingangsgleichspannung (Uᵢₙ) kleiner als das Übersetzungsverhältnis (n) ist.

2. Verfahren nach Anspruch 1, wobei die Phasenverschiebung zwischen einer Wechselspannungsphase (U_{P1}, U_{P2}, U_{P3}) der primären Wechselspannung und dem durch den Serienresonanzkreis (9) dieser Wechselspannungsphase (U_{P1}, U_{P2}, U_{P3}) fließenden Strom (I₁, I₂, I₃) auf Null geregelt wird, wenn das Verhältnis der Ausgangsgleichspannung (Uₒᵤₜ) zu der Eingangsgleichspannung (Uᵢₙ) größer als das Übersetzungsverhältnis (n) ist.

3. Verfahren nach Anspruch 1 oder 2, wobei die Phasenverschiebung zwischen einer Wechselspannungsphase (U_{S1}, U_{S2}, U_{S3}) der sekundären Wechselspannung und dem durch den Serienresonanzkreis (9) dieser Wechselspannungsphase (U_{S1}, U_{S2}, U_{S3}) fließenden Strom (I₁, I₂, I₃) auf Null geregelt wird, wenn das Verhältnis der Ausgangsgleichspannung (Uₒᵤₜ) zu der Eingangsgleichspannung (Uᵢₙ) kleiner als das Übersetzungsverhältnis (n) ist.

4. Verfahren nach Anspruch 1, wobei im Fall einer mehrphasigen Wechselspannung ein Mittelwert von Phasenverschiebungen zwischen jeweils einer Wechselspannungsphase (U_{P1}, U_{P2}, U_{P3}) der primären Wechselspannung und dem durch den Serienresonanzkreis (9) dieser Wechselspannungsphase (U_{P1}, U_{P2}, U_{P3}) fließenden Strom (I₁, I₂, I₃) auf Null geregelt wird, wenn das Verhältnis der Ausgangsgleichspannung (Uₒᵤₜ) zu der Eingangsgleichspannung (Uᵢₙ) größer als das Übersetzungsverhältnis (n) ist.

5. Verfahren nach Anspruch 1 oder 4, wobei im Fall einer mehrphasigen Wechselspannung ein Mittelwert von Phasenverschiebungen zwischen jeweils einer Wechselspannungsphase (U_{S1}, U_{S2}, U_{S3}) der sekundären Wechselspannung und dem durch den Serienresonanzkreis (9) dieser Wechselspannungsphase (U_{S1}, U_{S2}, U_{S3}) fließenden Strom (I₁, I₂, I₃) auf Null geregelt wird, wenn das Verhältnis der Ausgangsgleichspannung (Uₒᵤₜ) zu der Eingangsgleichspannung (Uᵢₙ) kleiner als das Übersetzungsverhältnis (n) ist.

6. Verfahren nach einem der vorhergehenden Ansprüche, wobei durch Änderung einer Phasenverschiebung zwischen der primären Wechselspannung und der sekundären Wechselspannung eine von dem Gleichspannungswandler (1) übertragene Leistung (P) auf einen Leistungssollwert (P_{S}) oder die Ausgangsgleichspannung (Uₒᵤₜ) auf einen Spannungssollwert geregelt wird.

7. Gleichspannungswandler (1) zum Erzeugen einer ein- oder mehrphasigen primären Wechselspannung aus einer Eingangsgleichspannung (Uᵢₙ), Transformieren der primären Wechselspannung in eine sekundäre Wechselspannung mit einem Übersetzungsverhältnis (n) und Erzeugen einer Ausgangsgleichspannung (Uₒᵤₜ) aus der sekundären Wechselspannung, der Gleichspannungswandler (1) umfassend
- für jede Wechselspannungsphase eine primärseitige Spannungsbrücke (11) mit mehreren Halbleiterschaltern (13) zum Erzeugen der primären Wechselspannung aus der Eingangsgleichspannung (Uᵢₙ),
- eine Transformatoreinheit (5) zum Transformieren der primären Wechselspannung in die sekundäre Wechselspannung,
- für jede Wechselspannungsphase eine sekundärseitige Spannungsbrücke (19) mit mehreren Halbleiterschaltern (13) zum Erzeugen der Ausgangsgleichspannung (Uₒᵤₜ) aus der sekundären Wechselspannung,
- für jede Wechselspannungsphase einen Serienresonanzkreis (9),
- eine Messvorrichtungsanordnung (27) zum Erfassen der Eingangsgleichspannung (Uᵢₙ), der Ausgangsgleichspannung (Uₒᵤₜ) und zeitlicher Verläufe wenigstens einer Wechselspannungsphase (U_{P1}, U_{P2}, U_{P3}) der primären Wechselspannung, der dazu korrespondierenden Wechselspannungsphase (U_{S1}, U_{S2}, U_{S3}) der sekundären Wechselspannung und des durch den Serienresonanzkreis (9) dieser Wechselspannungsphase fließenden Stroms (I₁, I₂, I₃), und
- eine Regelungseinheit (29), die dazu ausgebildet ist, eine Phasenverschiebung zwischen der primären Wechselspannung und einem dazu korrespondierenden Serienresonanzkreisstrom durch eine Änderung einer die Wechselspannungen taktenden Taktfrequenz (f) auf Null zu regeln, wenn das Verhältnis der Ausgangsgleichspannung (Uₒᵤₜ) zu der Eingangsgleichspannung (Uᵢₙ) größer als das Übersetzungsverhältnis (n) ist, und
- eine Phasenverschiebung zwischen der sekundären Wechselspannung und einem dazu korrespondierenden Serienresonanzkreisstrom durch eine Änderung der Taktfrequenz (f) auf Null zu regeln, wenn das Verhältnis der Ausgangsgleichspannung (Uₒᵤₜ) zu der Eingangsgleichspannung (Uᵢₙ) kleiner als das Übersetzungsverhältnis (n) ist.

8. Gleichspannungswandler (1) nach Anspruch 7, wobei im Fall einer mehrphasigen Wechselspannung jede primärseitige Spannungsbrücke (11) eine Halbbrücke ist, in deren Brückenarmen jeweils ein Halbleiterschalter (13) angeordnet ist und deren Brückenzweig mit einer Primärwicklung (17) der Transformatoreinheit (5) verbunden ist, und jede sekundärseitige Spannungsbrücke (19) eine Halbbrücke ist, in deren Brückenarmen jeweils ein Halbleiterschalter (13) angeordnet ist und deren Brückenzweig mit einer Sekundärwicklung (21) der Transformatoreinheit (5) verbunden ist.

9. Gleichspannungswandler (1) nach Anspruch 7, wobei im Fall einer einphasigen Wechselspannung die primärseitige Spannungsbrücke (11) eine Vollbrücke ist, in deren Brückenarmen jeweils ein Halbleiterschalter (13) angeordnet ist und deren Brückenzweig mit einer Primärwicklung (17) der Transformatoreinheit (5) verbunden ist, und die sekundärseitige Spannungsbrücke (19) eine Vollbrücke ist, in deren Brückenarmen jeweils ein Halbleiterschalter (13) angeordnet ist und deren Brückenzweig mit einer Sekundärwicklung (21) der Transformatoreinheit (5) verbunden ist.

10. Gleichspannungswandler (1) nach Anspruch 7 oder 8, wobei die Transformatoreinheit (5) im Fall einer mehrphasigen Wechselspannung als ein mehrphasiger Transformator ausgebildet ist oder für jede Wechselspannungsphase einen Transformator aufweist.

11. Gleichspannungswandler (1) nach einem der Ansprüche 7 bis 10, wobei die Regelungseinheit (29) wenigstens einen ersten Phasendetektor (43) zum Ermitteln einer Phasenverschiebung zwischen einer Wechselspannungsphase (U_{P1}, U_{P2}, U_{P3}) der primären Wechselspannung und dem durch den Serienresonanzkreis (9) dieser Wechselspannungsphase (U_{P1}, U_{P2}, U_{P3}) fließenden Strom (I₁, I₂, I₃) und einen zweiten Phasendetektor (44) zum Ermitteln einer Phasenverschiebung zwischen einer Wechselspannungsphase (U_{S1}, U_{S2}, U_{S3}) der sekundären Wechselspannung und dem durch den Serienresonanzkreis (9) dieser Wechselspannungsphase (U_{S1}, U_{S2}, U_{S3}) fließenden Strom (I₁, I₂, I₃) aufweist.

12. Gleichspannungswandler (1) nach einem der Ansprüche 7 bis 11, wobei die Regelungseinheit (29) dazu ausgebildet ist, die Phasenverschiebung zwischen einer Wechselspannungsphase (U_{P1}, U_{P2}, U_{P3}) der primären Wechselspannung und dem durch den Serienresonanzkreis (9) dieser Wechselspannungsphase (U_{P1}, U_{P2}, U_{P3}) fließenden Strom (I₁, I₂, I₃) auf Null zu regeln, wenn das Verhältnis der Ausgangsgleichspannung (Uₒᵤₜ) zu der Eingangsgleichspannung (Uᵢₙ) größer als das Übersetzungsverhältnis (n) ist, und die Phasenverschiebung zwischen einer Wechselspannungsphase (U_{S1}, U_{S2}, U_{S3}) der sekundären Wechselspannung und dem durch den Serienresonanzkreis (9) dieser Wechselspannungsphase (U_{S1}, U_{S2}, U_{S3}) fließenden Strom (I₁, I₂, I₃) auf Null zu regeln, wenn das Verhältnis der Ausgangsgleichspannung (Uₒᵤₜ) zu der Eingangsgleichspannung (Uᵢₙ) kleiner als das Übersetzungsverhältnis (n) ist.

13. Gleichspannungswandler (1) nach Anspruch 7 oder 8 oder einem der Ansprüche 10 bis 12, wobei im Fall einer mehrphasigen Wechselspannung die Messvorrichtungsanordnung (27) zum Erfassen zeitlicher Verläufe mehrerer Wechselspannungsphasen (U_{P1}, U_{P2}, U_{P3}) der primären Wechselspannung, der dazu korrespondierenden Wechselspannungsphasen (U_{S1}, U_{S2}, U_{S3}) der sekundären Wechselspannung und der durch die Serienresonanzkreise (9) dieser Wechselspannungsphasen fließenden Ströme (I₁, I₂, I₃) ausgebildet ist und die Regelungseinheit (29) dazu ausgebildet ist, einen Mittelwert der Phasenverschiebungen zwischen jeweils einer dieser Wechselspannungsphasen (U_{P1}, U_{P2}, U_{P3}) der primären Wechselspannung und dem durch den Serienresonanzkreis (9) dieser Wechselspannungsphase (U_{P1}, U_{P2}, U_{P3}) fließenden Strom (I₁, I₂, I₃) auf Null zu regeln, wenn das Verhältnis der Ausgangsgleichspannung (Uₒᵤₜ) zu der Eingangsgleichspannung (Uᵢₙ) größer als das Übersetzungsverhältnis (n) ist, und einen Mittelwert der Phasenverschiebungen zwischen jeweils einer dieser Wechselspannungsphasen (U_{S1}, U_{S2}, U_{S3}) der sekundären Wechselspannung und dem durch den Serienresonanzkreis (9) dieser Wechselspannungsphase (U_{S1}, U_{S2}, U_{S3}) fließenden Strom (I₁, I₂, I₃) auf Null zu regeln, wenn das Verhältnis der Ausgangsgleichspannung (Uₒᵤₜ) zu der Eingangsgleichspannung (Uᵢₙ) kleiner als das Übersetzungsverhältnis (n) ist.

14. Gleichspannungswandler (1) nach einem der Ansprüche 7 bis 13, wobei die Regelungseinheit (29) dazu ausgebildet ist, durch Änderung einer Phasenverschiebung zwischen der primären Wechselspannung und der sekundären Wechselspannung eine von dem Gleichspannungswandler (1) übertragene Leistung (P) auf einen Leistungssollwert (P_{S}) oder die Ausgangsgleichspannung (Uₒᵤₜ) auf einen Spannungssollwert zu regeln.

15. Gleichspannungswandler (1) nach einem der Ansprüche 7 bis 14, wobei jeder Serienresonanzkreis (9) auf der Sekundärseite oder der Primärseite der Transformatoreinheit (5) angeordnet ist oder die Komponenten jedes Serienresonanzkreises (9) auf die Sekundärseite und die Primärseite der Transformatoreinheit (5) verteilt sind.
